# EUROPEAN PATENT APPLICATION

(11) **EP 4 708 170 A1**
(43) Date of publication of application: **11.03.2026**
(21) Application number: 25200520.2
(22) Date of filing: 05.09.2025
(51) Int. Cl.: G06Q 10/20

(54) **ARTIFICIAL INTELLIGENCE ADVANCED FLEET MONITORING SYSTEMS**

(30) Priority: 06.09.2024 IN 202411067589
(71) Applicant: Enphase Energy, Inc., Petaluma, CA 94954 (US)
(72) Inventor: PINNADA, Preetam, 530049 Visakhapatnam (IN); BANSAL, Ashish, 560037 Bengaluru (IN); MATHUR, Nitish, Freemont, CA 94539 (US)
(74) Representative: HGF

(57) **Abstract**

An artificial intelligence (AI) advanced fleet monitoring system is provided and comprises a first module configured to detect anomalies of a component associated with the AI advanced fleet monitoring system, a second module configured to cluster or classify failure modes and interpretation, a third module configured to predict failure alerts, a fourth module configured to initiate an automated task or service request, and a fifth module configured to receive an input from at least one of the first module, second module, third module, or fourth module and generate a Chatbot configured to communicate with a user for remedying the anomalies.

## Description

### BACKGROUND

### 1. Field of the Disclosure

Embodiments of the present disclosure generally relate to fleet monitoring systems and, for example, to methods and apparatus that use artificial intelligence advanced fleet monitoring systems.

### 2. Description of the Related Art

Conventional power conversion systems (energy management systems) are very well known. Customer support (CS), however, solely through human agents is not a scalable solution for such power conversion systems and is not efficient due to the numerous amounts of information that is scattered across the tool chain, which is not easily available to the CS team in actionable format. For example, fleet data is, typically, analyzed using one or more statistical methods, but statistical methods are only in reaction to field failures and/or customer cases.

Therefore, described herein are improved methods and apparatus that use artificial intelligence advanced fleet monitoring systems.

### SUMMARY

In accordance with some aspects of the present disclosure, there is provided an artificial intelligence (AI) advanced fleet monitoring system that comprises a first module configured to detect anomalies of a component associated with the AI advanced fleet monitoring system, a second module configured to cluster or classify failure modes and interpretation, a third module configured to predict failure alerts, a fourth module configured to initiate an automated task or service request, and a fifth module configured to receive an input from at least one of the first module, second module, third module, or fourth module and generate a Chatbot configured to communicate with a user for remedying the anomalies.

In accordance with some aspects of the present disclosure, there is provided a method for fleet monitoring using advanced enabled artificial intelligence/machine learning (AI/ML). The method comprises detecting anomalies of a component associated with the AI advanced fleet monitoring system using a first module, clustering or classifying failure modes and interpretation using a second module, predicting failure alerts using a third module, initiating an automated task or service request using a fourth module, and receiving an input from at least one of the first module, second module, third module, or fourth module and generating, using a fifth module, a Chatbot configured to communicate with a user for remedying the anomalies.

Various advantages, aspects, and novel features of the present disclosure may be appreciated from a review of the following detailed description of the present disclosure, along with the accompanying figures in which like reference numerals refer to like parts throughout.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only a typical embodiment of this disclosure and are therefore not to be considered limiting of its scope, for the disclosure may admit to other equally effective embodiments.
Figure 1 is a block diagram of a system for power conversion, in accordance with at least some embodiments of the present disclosure;
Figure 2 is a diagram of a method for fleet monitoring using advanced enabled artificial intelligence/machine learning (AI/ML), in accordance with at least some embodiments of the present disclosure;
Figure 3 is a diagram of the various Chatbots that can be configured for use with the advanced enabled artificial intelligence/machine learning (AI/ML) of Figure 2, in accordance with at least some embodiments of the present disclosure; and
Figures 4-6 are diagrams of various outputs from the advanced enabled artificial intelligence/machine learning (AI/ML) of Figure 2, in accordance with at least some embodiments of the present disclosure.

### DETAILED DESCRIPTION

In accordance with the present disclosure, described herein are methods and apparatus that use artificial intelligence advanced fleet monitoring systems. For example, an artificial intelligence (AI) advanced fleet monitoring system can comprise a first module configured to detect anomalies of a component associated with the AI advanced fleet monitoring system, a second module configured to cluster or classify failure modes and interpretation, a third module configured to predict failure alerts, a fourth module configured to initiate an automated task or service request, and a fifth module configured to receive an input from at least one of the first module, second module, third module, or fourth module and generate a Chatbot configured to communicate with a user for remedying the anomalies. The inventive concepts described herein provide LLM Chatbots that use chain-of-thought prompting and RAG framework, and the LLM Chatbots can be integrated with domain specific models and applications. Compared to conventional fleet monitoring systems, which have predefined menus and workflows or respond based on a corpus of text, the LLM Chatbots described herein use rich insights by calling AI models/tools, e.g., in the context of microinverters and/or solar systems.

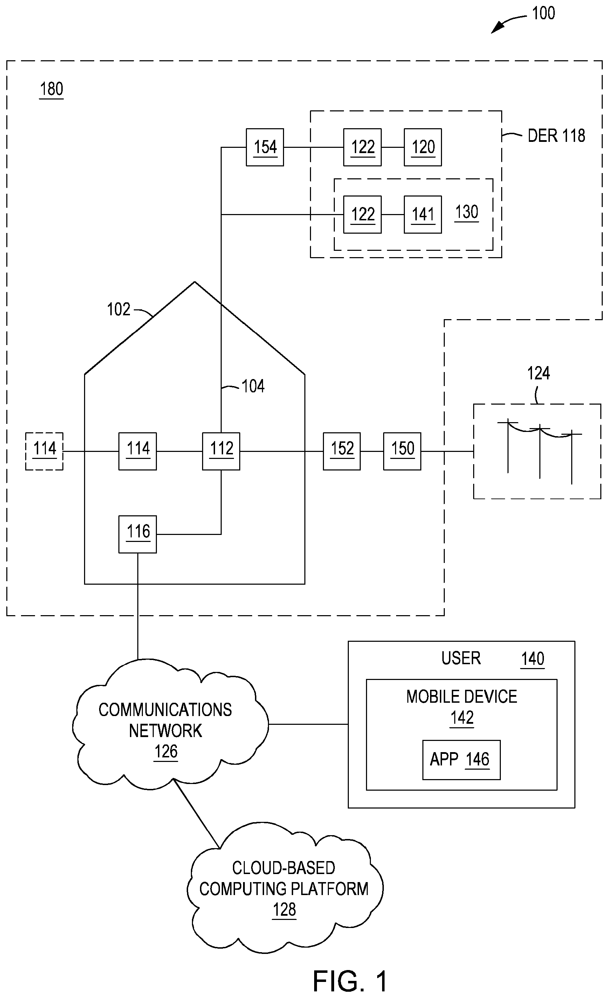

Figure 1 is a block diagram of an energy management system (e.g., power conversion system, system 100) in accordance with one or more embodiments of the present disclosure. The diagram of Figure 1 only portrays one variation of the myriad of possible system configurations. The present disclosure can function in a variety of environments and systems.

The system 100 comprises a structure 102 (e.g., a user's structure, such as a home), such as a residential home, commercial building, or separate mounting structure, having an associated DER 118 (distributed energy resource). The DER 118 is situated external to the structure 102. For example, the DER 118 may be located on the roof of the structure 102 or can be part of a solar farm. Alternatively, the DER 118 can be situated inside the structure 102. For example, when the DER 118 is a permanent residential battery energy storage system, the DER 118 may be installed in a garage (or other suitable location inside the structure 102). The structure 102 comprises a DER controller 116 and one or more loads and/or energy storage devices 114 (e.g., portable energy systems (PES), appliances, electric hot water heaters, thermostats/detectors, boilers, electric vehicle supply equipment (EVSE), EVs, water pumps, and the like), which can be located within or outside the structure 102. The DER controller 116 and the one or more loads and/or energy storage devices 114 can each be coupled to a load center 112. Although the one or more loads and/or energy storage devices 114, the DER controller 116, and the load center 112 are depicted as being located within the structure 102, one or more of these may be located external to the structure 102.

The load center 112 is coupled to the DER 118 by an AC bus 104 and is further coupled, via a meter 152 (utility meter comprising a utility meter socket) and optionally a MID 150 (microgrid interconnect device), to a grid 124 (e.g., a commercial/utility power grid). The structure 102, the one or more loads and/or energy storage devices 114, DER controller 116, DER 118, load center 112, generation meter 154, the meter 152, and the MID 150 are part of a microgrid 180. It should be noted that one or more additional devices not shown in Figure 1 may be part of the microgrid 180. For example, a power meter or similar device may be coupled to the load center 112.

The DER 118 comprises at least one renewable energy source (RES) coupled to power conditioners 122 (e.g., microinverter, power converter, power conversion units (PCUs), etc.). For example, the DER 118 may comprise a plurality of RESs 120 coupled to a plurality of power conditioners 122 in a one-to-one correspondence (or two-to-one). In at least some embodiments, each RES of the plurality of RESs 120 is a photovoltaic module (PV module), although in other embodiments the plurality of RESs 120 may be any type of system for generating DC power from a renewable form of energy, such as wind, hydro, and the like. The DER 118 may further comprise one or more batteries (or other types of energy storage/delivery devices) coupled to the power conditioners 122 in a one-to-one correspondence, where each pair of power conditioner 122 and a DC battery 141 may be referred to as an AC battery 130.

The power conditioners 122 invert the generated DC power from the plurality of RESs 120 and/or the DC battery 141 to AC power that is grid-compliant and couple the generated AC power to the grid 124 via the load center 112. The generated AC power may be additionally or alternatively coupled via the load center 112 to the one or more loads and/or the energy storage devices 114. In addition, the power conditioners 122 that are coupled to the DC batteries convert AC power from the AC bus 104 to DC power for charging the DC batteries. A generation meter 154 is coupled at the output of the power conditioners 122 that are coupled to the plurality of RESs 120 in order to measure generated power.

In at least some embodiments, the power conditioners 122 may be AC-AC converters that receive AC input and convert one type of AC power to another type of AC power. Alternatively, the power conditioners 122 may be DC-DC converters that convert one type of DC power to another type of DC power. The DC-DC converters may be coupled to a main DC-AC inverter for inverting the generated DC output to an AC output.

The power conditioners 122 may communicate with one another and with the DER controller 116 using power line communication (PLC), although additionally and/or alternatively other types of wired and/or wireless communication may be used. The DER controller 116 may provide operative control of the DER 118 and/or receive data or information from the DER 118. For example, the DER controller 116 may be a gateway that receives data (e.g., alarms, messages, operating data, performance data, and the like) from the power conditioners 122 and communicates the data and/or other information via the communications network 126 to a cloud-based computing platform 128. The cloud-based computing platform 128 can be configured to execute one or more application software, e.g., a grid connectivity control application, to a remote device or system such as a master controller (not shown), and the like. The DER controller 116 may also send control signals to the power conditioners 122, such as control signals generated by the DER controller 116 or received from a remote device or the cloud-based computing platform 128. The DER controller 116 may be communicably coupled to the communications network 126 via wired and/or wireless techniques. For example, the DER controller 116 may be wirelessly coupled to the communications network 126 via a commercially available router. In one or more embodiments, the DER controller 116 comprises an application-specific integrated circuit (ASIC) or microprocessor along with suitable software (e.g., a grid connectivity control application) for performing one or more of the functions described herein (e.g., the methods described herein).

The generation meter 154 (which may also be referred to as a production meter) may be any suitable energy meter that measures the energy generated by the DER 118 (e.g., by the power conditioners 122 coupled to the plurality of RESs 120). The generation meter 154 measures real power flow (kWh) and, in some embodiments, reactive power flow (kVAR). The generation meter 154 may communicate the measured values to the DER controller 116, for example using PLC, other types of wired communications, or wireless communication. Additionally, battery charge/discharge values are received through other networking protocols from the DC battery itself.

The meter 152 may be any suitable energy meter that measures the energy consumed by the microgrid 180, such as a net-metering meter, a bi-directional meter that measures energy imported from the grid 124 and well as energy exported to the grid 124, a dual meter comprising two separate meters for measuring energy ingress and egress, and the like. In at least some embodiments, the meter 152 comprises the MID 150 or a portion thereof. The meter 152 measures one or more of real power flow (kWh), reactive power flow (kVAR), grid frequency, and grid voltage. The meter 152 measures power flows independently of MID state, i.e., when MID is closed and DER's are connected to the grid and when MID is open and DER's are isolated from the grid.

The MID 150, which may also be referred to as an island interconnect device (IID), connects/disconnects the microgrid 180 to/from the grid 124. The MID 150 comprises a disconnect component (e.g., a relay, a contactor, or the like) for physically connecting/disconnecting the microgrid 180 to/from the grid 124. For example, the DER controller 116 receives information regarding the present state of the system from the power conditioners 122 and also receives the energy consumption values of the microgrid 180 from the meter 152 (for example via one or more of PLC, other types of wired communication, and wireless communication), and based on the received information (inputs), the DER controller 116 determines when to go on-grid or off-grid and instructs the MID 150 accordingly. In some alternative embodiments, the MID 150 can comprise an ASIC or CPU, along with suitable software (e.g., an islanding module) for determining when to disconnect from/connect to the grid 124. For example, the MID 150 may monitor the grid 124 and detect a grid fluctuation, disturbance or outage and, as a result, disconnect the microgrid 180 from the grid 124. Once disconnected from the grid 124, the microgrid 180 can continue to generate power as an intentional island without imposing safety risks, for example on any line workers that may be working on the grid 124.

In some alternative embodiments, the MID 150 or a portion of the MID 150 is part of the DER controller 116. For example, the DER controller 116 may comprise a CPU and an islanding module for monitoring the grid 124, detecting grid failures and disturbances, determining when to disconnect from/connect to the grid 124, and driving a disconnect component accordingly. The disconnect component may be part of the DER controller 116 or, alternatively, separate from the DER controller 116. In some embodiments, the MID 150 may communicate with the DER controller 116 (e.g., using wired techniques such as power line communications, or using wireless communication) for coordinating connection/disconnection to the grid 124.

A user 140 can use one or more computing devices, such as a mobile device 142 (e.g., a smart phone, tablet, or the like) communicably coupled by wireless means to the communications network 126. The mobile device 142 has a CPU, support circuits, and memory, and has one or more applications (e.g., a grid connectivity control application (an application 146)) installed thereon for controlling the connectivity with the grid 124. The mobile device 142 may run on commercially available operating systems, such as IOS, ANDROID, and the like.

In order to control connectivity with the grid 124, the user 140 interacts with an icon displayed on the mobile device 142, for example a grid on-off toggle control or slide, which is referred to herein as a toggle button. The toggle button may be presented on one or more status screens pertaining to the microgrid 180, such as a live status screen (not shown), for various validations, checks and alerts. The first time the user 140 interacts with the toggle button, the user 140 is taken to a consent page, such as a grid connectivity consent page, under setting and will be allowed to interact with toggle button only after he/she gives consent.

Once consent is received, the scenarios below, listed in order of priority, will be managed differently. Based on the desired action as entered by the user 140, the corresponding instructions are communicated to the DER controller 116 via the communications network 126 using any suitable protocol, such as HTTP(S), MQTT(S), WebSockets, and the like. The DER controller 116, which may store the received instructions as needed, instructs the MID 150 to connect to or disconnect from the grid 124 as appropriate.

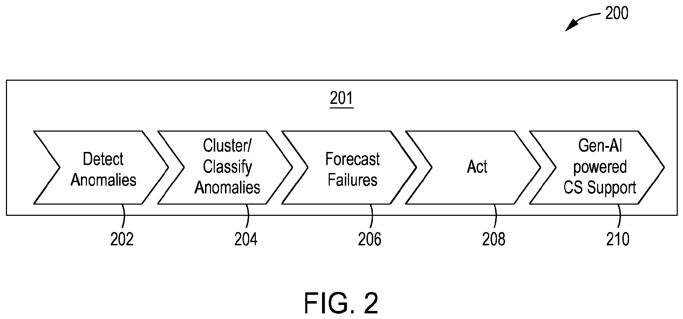

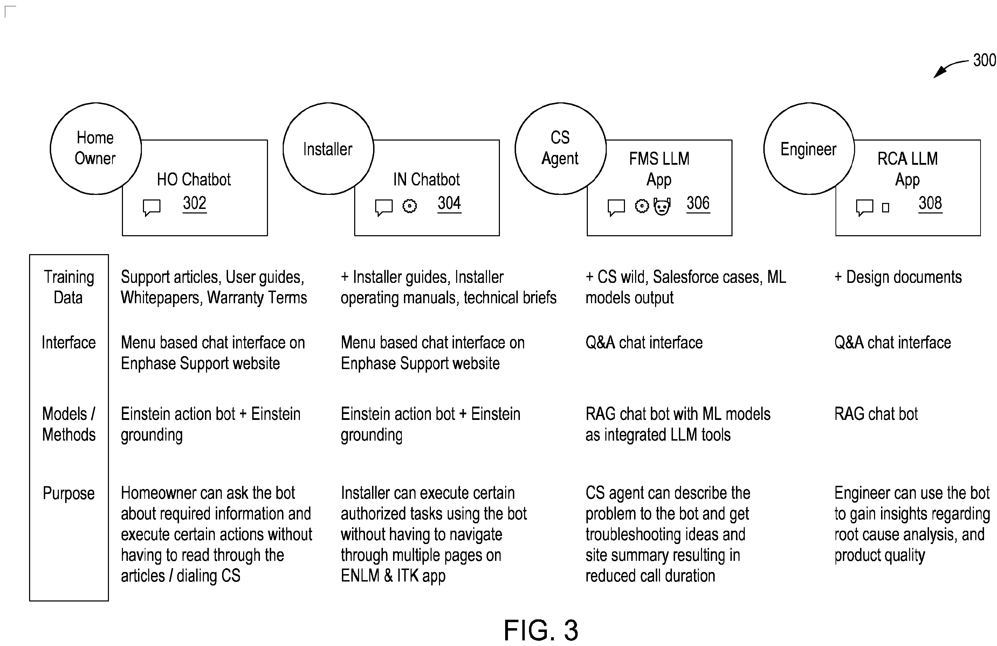

Figure 2 is a diagram of a method 200 for fleet monitoring using advanced enabled artificial intelligence/machine learning (AI/ML) (the AI/ML 201), which can be used with use with the system for power conversion of Figure 1, and Figure 3 is a diagram 300 of the various Chatbots (ChatGPT) that can be configured for use with the AI/ML 201 of Figure 2, in accordance with at least some embodiments of the present disclosure. In at least some embodiments, the AI/ML 201 is in operable communication with the DER controller 116 and/or one or more components of the system 100 (e.g., all components of the system 100, i.e., associated with the AI/ML 201).

For example, the inventors have designed the AI/ML 201 for any internet-of-things (IoT) system (e.g., the system 100 and components associated therewith) that can deliver predictive maintenance at scale, efficient redressal, reduced number call volume and duration, design and quality (RCA) insights. The AI/ML 201 enables internal efficiency/cost savings, scalability and recurring revenue opportunity (e.g., high gross margin).

For example, the inventive concepts described herein use an ensemble of models, e.g., autoencoder, association rule learning, clustering, classifier/detector, and an LLM, to address different stages of failure analysis viz. detectability, predictability, and explain-ability, as described in greater detail below. Additionally, the inventors created a composite health score (e.g., device health indicator (DHI)) that integrates inference results from different ML models. The health score uses one or more qualitative and/or quantitative health summary of devices, as described in greater detail below. Moreover, one or more multiple use cases are described herein using Gen-AI/ML based technologies that are integrated into an advanced fleet management workflow, as described in greater detail below.

Continuing with refence to Figure 2, the AI/ML 201 can be configured to detect anomalies (see 202, a first module configured to detect anomalies of a component associated with the AI/ML 201, e.g., the method 200 comprises detecting anomalies of a component associated with the AI advanced fleet monitoring system using a first module). For example, in at least some embodiments, at 202, inputs to the AI/ML 201 can comprise telemetry data and events data, and outputs from the AI/ML 201 can comprise a list of detected anomalies. Additionally, at 202, the AI/ML 201 can use one or more learning models/methods, such as logistic regression and autoencoder, which can provide real-time detection, as opposed to reactive analysis which conventional systems provide, and can benefit network operations center (NOC) and quality control.

Additionally, in at least some embodiments, the AI/ML 201 can be configured to enable the advanced fleet monitoring system to cluster/classify anomalies (see 204, a second module configured to cluster or classify failure modes and interpretation, e.g., the method 200 comprises clustering or classifying failure modes and interpretation using a second module). For example, at 204, inputs to the AI/ML 201 can comprise a list of anomalies and events data, and outputs from the AI/ML 201 can comprise clusters/classes of failure modes and interpretation. For example, in at least some embodiments, the second module can class/cluster one or more components of the system 100 (e.g., a class/cluster 2 (AC side), a class/cluster 0 (communications), etc.). Additionally, at 204, the AI/ML 201 can use one or more learning models/methods, such as K-means clustering and principal component analysis (PCA), which can provide automated discovery of failure modes, as opposed to manual grouping into known which conventional systems provide, and can benefit NOC, engineering, and quality control.

Moreover, in at least some embodiments the AI/ML 201 can be configured to enable the advanced fleet monitoring system to forecast failures (see 206, a third module configured to receive the at least one of cluster or classify failure modes and interpretation from the second module and predict failure alerts, e.g., the method 200 comprises predicting failure alerts using a third module). For example, at 206, inputs to the AI/ML 201 can comprise a list of labelled anomalies and events transition diagrams, and outputs from the AI/ML 201 can comprise failure prediction alerts ahead of time, based on one or more rules. Additionally, at 206, the AI/ML 201 can use one or more learning models/methods, such as association rule learning and deep learning, which can provide new insights to fast-track RCA and predictability, as opposed to limited reasoning for RCA and inability to forecast failures which conventional systems provide. The AI/ML 201 can also benefit NOC, engineering, and quality control.

Furthermore, in at least some embodiments the AI/ML 201 can be configured to enable the advanced fleet monitoring system to respond/initiate/act in view of 206 (see 208, a fourth module configured to receive the predict failure alerts from the third module and initiate an automated task or service request, e.g., the method 200 comprises initiating an automated task or service request using a fourth module). For example, at 208, inputs to the AI/ML 201 can comprise failure prediction alerts, and outputs from the AI/ML 201 can comprise automated energy management system control software tasks (or) initiate service request. For example, in at least some embodiments, the AI/ML 201 can be configured to perform one or more operations of one or more components of the system 100 (e.g., an automatic shutdown of a PCU, a restart of a gateway, etc.). Additionally, at 208, the AI/ML 201 can use one or more learning models/methods, such as task automation and/or Workflow orchestration, which can provide proactive and automated redressal, as opposed to reactive and manual tasks, work-order generation, which conventional systems provide, and can benefit CS, Field Service Technician (FST), Operations and Maintenance (O and M). In at least some embodiments, the fourth module can provide a summary (e.g., using ChatGPT) of the outputs from any module of the AI/ML 201 to a CS agent.

Likewise, in at least some embodiments, the AI/ML 201 can be configured to enable the advanced fleet monitoring system to provide Gen-AI powered CS Support (see 210, a fifth module configured to receive at least one output from the first module, second module, third module, or fourth module and generate a Chatbot configured to communicate with a user for remedying the anomalies, e.g., the method 200 comprises receiving an input from at least one of the first module, second module, third module, or fourth module and generating, using a fifth module, a Chatbot configured to communicate with a user for remedying the anomalies). For example, at 210, inputs to the AI/ML described herein can comprise outputs of all previous operations (402-408) + CS call data + company Knowledge Database (KDB), and outputs from the AI/ML described herein can comprise site summary of anomalies detected, events, tasks, history, steps taken etc. in a company's platform (E.g., ENL), Sales Force Platform (SFDC), data platform, etc. Additionally, at 210, the AI/ML described herein can use one or more learning models/methods, such as LLM and/or natural language processing (NLP), which can provide reduced call duration, holistic and effective resolution with added context from LLM trained on company KDB, and can benefit CS,

In accordance with at least some embodiments, the AI/ML 201 use AI chatbots (installer-facing and customer-facing) that are configured to significantly enhance customer service (experience) by automating one or more routine tasks and ensuring the availability of higher quality actionable information through Gen-AI large language model (LLM), which can be trained on data and documents. That is, the LLM are neural networks, which are machine learning models that take an input and perform mathematical calculations to produce an output.

For example, with respect to customer experience, the AI chatbots can improve customer experience through LLM powered RAG chatbot applications, which would serve as a first point of contact or a self-service interface for one or more users (e.g., homeowners or installers), thus resulting in reduced CS call volume. Additionally, the AI chatbots can be used to generate content for a support website and/or community. With respect to productivity, business intelligence (BI) users (e.g., NOC, engineer, executive, etc.) can query and analyze data using natural language. In at least some embodiments, the AI chatbots can be used for automated call summarization, tagging, and/or assist new CS agent training. In at least some embodiments, the AI chatbots can be augmented with one or more LLM tools (e.g., in-house machine learning (L) models and systems), can troubleshoot/ideate based on natural language instruction from CS agent, thus resulting in improved productivity and reduced mean call duration. With respect to quality, the LLMs described herein, which are capable of processing images, can be used to understand site geographic characteristics based on satellite images and can be used to generate connection diagrams for installers. Additionally, the LLMs (e.g., such as multi-modal LLMs) described herein can be used by engineers for root cause analysis, quality design insights, and/or generation of quick automation scripts and webpages.

Continuing with reference to Figure 3, in accordance with at least some embodiments of the present disclosure, with respect to HO Chatbots 302, the training data can comprise support articles, user guides, whitepapers, warranty terms, and the like. The HO Chatbots 302 can use a chat interface that can be menu based and accessible via a support website. The HO Chatbots 302 can use one or more models/method, e.g., Einstein action bot -Chatbots that are easy to configure from Salesforce's User Interface + Einstein grounding -the process of adding other context to the record so that the Large Language Model (LLM) has the information it needs to return a response that is correct and useful. The HO Chatbots 302 are configured to allow a homeowner to ask the HO Chatbots 302 about required information and execute certain actions without having to read the articles/dialing CS.

In at least some embodiments, IN Chatbots 304 (installer) can be used for fleet management. For example, when an installer has multiple sites (e.g., thousands), the installer can ask the IN Chatbots 304 to "find all CT problems in my fleet and fix them." In such embodiments, the above steps can be performed on/for all sites and a summation of information can be orchestrated back and forth with the IN Chatbots 304. For example, in accordance with at least some embodiments of the present disclosure, with respect to the IN Chatbots 304, the training data can comprise support articles, user guides, whitepapers, warranty terms, installer guides, installer operating manuals, technical briefs, and the like. The IN Chatbots 304 can use a chat interface that can be menu based and accessible via a support website. The IN Chatbots 304 can use one or more models/method, e.g., Einstein action bot -Chatbots that are easy to configure from Salesforce's User Interface + Einstein grounding -the process of adding other context to the record so that the Large Language Model (LLM) has the information it needs to return a response that is correct and useful. The IN Chatbots 304 are configured to allow an installer to execute one or more authorized tasks using the IN Chatbots 304 without having to navigate through multiple pages on one or more user applications.

Furthermore, in accordance with at least some embodiments of the present disclosure, with respect to CS Chatbots 306 (e.g., foundational models (FMS)/LLM application), the training data can comprise CS wiki, Salesforce cases, ML models output. The CS Chatbots 306 can use a Q&A chat interface. The CS Chatbots 306 can use one or more models/method, e.g., RAG chat bot with ML models as integrated LLM tools. The CS Chatbots 306 are configured to allow a CS agent to describe a problem to the CS Chatbots and get troubleshooting ideas and site summary resulting in reduced call duration.

Likewise, in accordance with at least some embodiments of the present disclosure, with respect to engineer Chatbots 308 (e.g., root cause analysis (RCA)/LLM application), the training data can comprise design documents. The engineer Chatbot 308 can use a Q&A chat interface. The engineer Chatbots 308 can use one or more models/method, e.g., RAG chat bot with ML models as integrated LLM tools. The engineer Chatbots 308 are configured to allow an engineer to use the engineer Chatbot 308 to gain insight regarding root cause analysis and/or product quality.

As can be appreciated, any of the training data, interface, models/methods, and purposes described above can be used with any of the HO Chatbots 302, IN Chatbots 304, CS Chatbots 306, and engineer Chatbots 308, e.g., the training data, interface, models/methods, and purposes of the HO Chatbots 302 can also be used with the IN Chatbots 304, CS Chatbots 306, and/or engineer Chatbots 308, and vice versa. For example, the Einstein action bot + Einstein grounding methods/models of the HO Chatbots 302 and the IN Chatbots 304 can be used in addition to or in place of the RAG chat bot with ML models as integrated LLM tools of the CS Chatbots 306 and the engineer Chatbots 308, and vice versa.

As noted above, the AI/ML 201 can be used for fleet management (e.g., case history, automated actions, causes). For example, the AI/ML 201 can be used to organize data in a data warehouse (DWH), clean/transform and prepare for AI/ML algorithm consumption. The AI/ML 201 can be used to detect anomalies in time series telemetry data using, for example, an autoencoder neural network. The AI/ML 201 can be used to cluster the anomalies to understand broader failure modes using, for example, K-Means clustering algorithm. The AI/ML 201 can be used to enrich the anomalous telemetry records, i.e., with failure mode label, events data, site & device metadata, logs, and construct a dataset of episodes for each failure mode around the anomalous timestamps. The AI/ML 201 can be used to input the set of episodes/transactions to an association rule mining method (e.g., frequent pattern (FP)-growth algorithm) to discover correlations, lead indicators/predictors, and rules for each failure mode. If a failure mode has a well-defined predictor(s), The AI/ML 201 is configured to train a classifier (e.g., a binomial logistic regression model) on a dataset with forecast window (lag) as the lead time of the predictor. During inference on live streaming data, the AI/ML 201 is configured to use ensemble models viz. Bi-logistic regression (LR) and FP-growth rules to derive a composite health score for each device and site indicating their RUL/TTF (e.g., remaining useful life/time to failure). The AI/ML 201 is configured to set alerts to notify downstream task automation to act when the composite health score drops below a critical threshold. The AI/ML 201 can use an LLM that is RAG (e.g., digest textual knowledge articles, documents, metrics) customized or fine-tuned using a knowledge base (e.g., KDB, a vector database), which can be built from one or more of customer calls data, definitions, specifications, site case history, alerts, tasks, logs. The AI/ML 201 is configured to present a CS (e.g., customer service call data analytics -audio transcription, call summarization, tags, etc.), an NOC (e.g., query tabular data in natural language -for NOC reports), an engineer with a site summary, troubleshooting steps, RCA, similar cases, and an interactive chatbot to talk to the data.

The AI/ML 201 can be configured to provide a device health indicator (DHI) that provides a health of a device of a component associated with the AI/ML 201 (e.g., at the third module). For example, the DHI can comprise two components, viz., a quantitative score and a qualitative description. For example, in at least some embodiments, a quantitative score can be either discrete (1: defective - 5: healthy) or continuous (0 - 100%). For example, a quantitative score (e.g., 73% or 4) can indicate a severity and/or urgency to act/escalate (at 208). In such embodiments, an autoencoder can be configured to create a contextual or point anomaly severity score. Additionally, the AI/ML 201 can generate an association rule learning algorithm configured to create a rule confidence using the contextual or point anomaly severity score. The AI/ML 201 can generate a classifier configured to create a confidence using the rule confidence. And, the AI/ML 201 can generate a DHI output created using rule confidence (at 210).

In at least some embodiments, the AI/ML 201 can be configured to provide the qualitative description. The qualitative description (e.g., a potential AC FET degradation or warning code 7!) can be used at 208 (by ACT to decide which automated action to take). In such embodiments, the AI/ML 201 can be configured to generate a classifier (binomial or multinomial logic regression (LR)) used to create a class (at 206). The AI/ML 201 can be configured to generate a cluster (e.g., K-means clustering at 206) using the class (at 206). The AI/ML 201 can be configured to generate an output comprising a class and/or a cluster description (at 210).

The AI/ML 201 can be configured to provide a site health indicator (SHI). For example, the SHI can be a summary of health indicators of all devices present on a site using the DHIs of all devices present on the site (e.g., at the third module). In at least some embodiments, the SHI can be configured to provide a qualitative summary of a health of all devices (e.g., all components of the system 100, i.e., associated with the AI/ML 201) on the site, specifically describing a cause of the anomalies associated with a device (at 202). The SHI can provide one or more outputs (at 210). For example, in at least some embodiments, the SHI can be configured to provide a graphical plot of aggregated risk due to device anomalies. In at least some embodiments, the SHI output can be, for example, an "all devices normal ✔" output, a "1 Error ! and/or 2 Warnings Δ output," "1 microinverter requires immediate attention (not producing) ! and/or 2 microinverters recording high temperatures Δ output" and/or a graphical plot of aggregated risk output, e.g., similar to ECG.

The AI/ML 201 can be configured to provide any of the Chatbots described herein with the capability of fetching site information and executing various company platform (e.g., Enlighten^{®} (ENL) platform available from Enphase^{®} Inc.) tasks on behalf of the homeowner. The AI/ML 201 can be configured to understand satellite images, e.g., classifying sites with pool, pump, high altitude, edge of grid, etc. The AI/ML 201 can be configured to help an installer with system connections using augmented reality (AR), which can be trained on a Quick Installation Guide (QIG), diagrams, product images, etc. The AI/ML 201 can be configured to provide quick automation script generation for NOC/CX. The AI/ML 201 can be configured to provide design insights through circuit/netlist generation for hardware (HW) developers and quick content and wireframe generation for support and community.

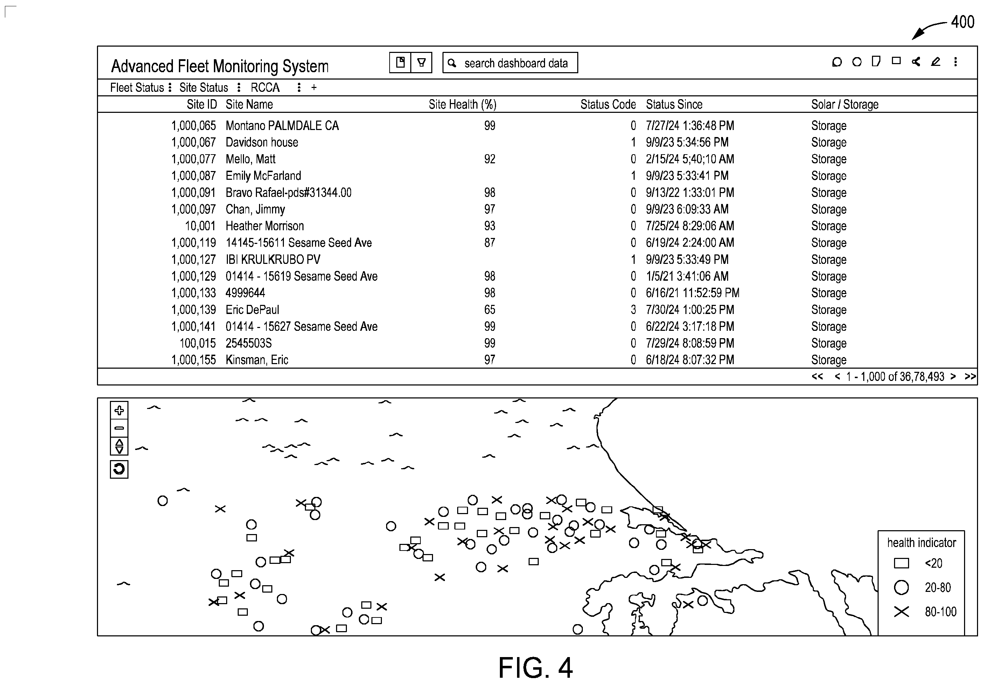

Figures 4-6 are diagrams of various outputs (e.g., DHI/SHI) from the artificial intelligence/machine learning (AI/ML) enabled advanced fleet monitoring system of Figure 2, in accordance with at least some embodiments of the present disclosure.

For example, Figure 4 illustrates a screenshot 400 of a dashboard of the artificial intelligence/machine learning (AI/ML) enabled advanced fleet monitoring system. In at least some embodiments, the screenshot 400 can comprise one or more information fields including, but not limited to, a fleet status field, a site status field, an RCCA field, and search dashboard data field, and a site health (%) field, which as described above, can be used to display (output) a summary of health indicators of all devices present on a site using the DHIs of all devices present on the site.

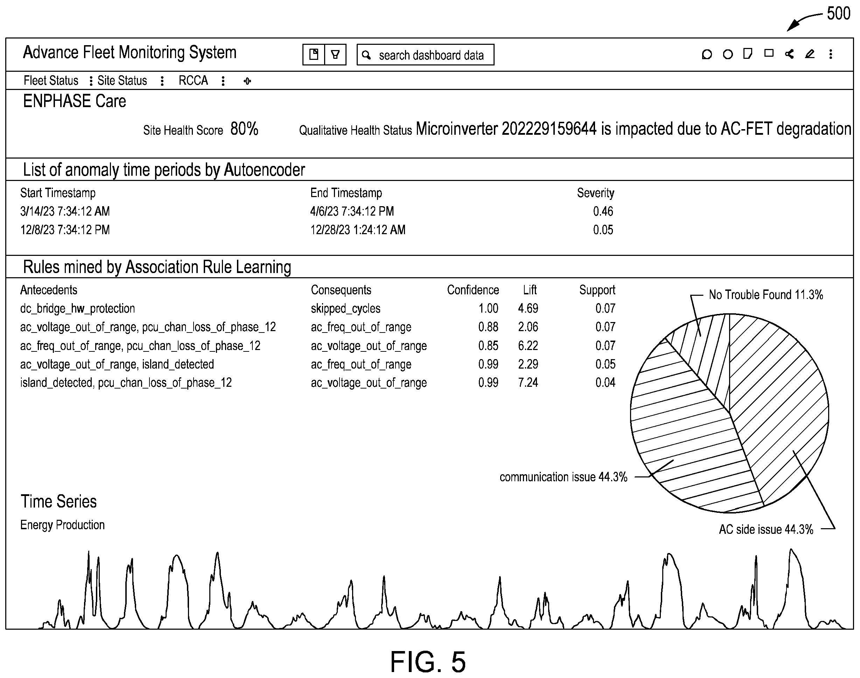

Similarly, Figure 5 illustrates a screenshot 500 of a dashboard of the artificial intelligence/machine learning (AI/ML) enabled advanced fleet monitoring system. In at least some embodiments, the screenshot 500 can comprise detailed information related to the site status field of Figure 4. As illustrated in Figure 5, the screenshot 500 can display a graph of clusters by K-means, a site health score, a list of anomaly time periods generated by the autoencoder, a rules mined by association generated by the association rule learning, a time series of energy production graph, and a qualitive health status (e.g., of a microinverter (the DER controller 116) that is impacted due to AC-FET degradation.

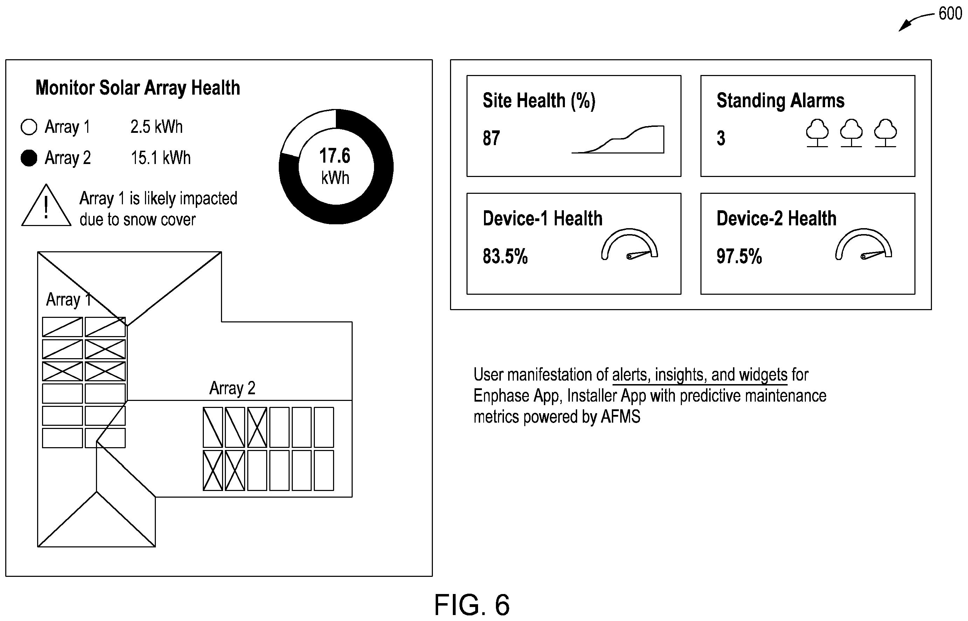

Similarly, Figure 6 illustrates a screenshot 600 of a dashboard of the artificial intelligence/machine learning (AI/ML) enabled advanced fleet monitoring system. For example, the screenshot 600 can display a user manifestation of alerts, insights, and/or widgets for company application software and an installer application software with predictive maintenance metrics. In at least some embodiments, the screenshot 600 can comprise a monitor solar array health and a site health (%), standing alarms, and one or more device health scores (a device 1 83.5% and a device 2 97.5%).

While the foregoing is directed to embodiments of the present disclosure, other and further embodiments of the disclosure may be devised without departing from the basic scope thereof, and the scope thereof is determined by the claims that follow.

## Claims

1. An artificial intelligence (AI) advanced fleet monitoring system, comprising:
a first module configured to detect anomalies of a component associated with the AI advanced fleet monitoring system;
a second module configured to cluster or classify failure modes and interpretation;
a third module configured to predict failure alerts;
a fourth module configured to initiate an automated task or service request; and
a fifth module configured to receive an input from at least one of the first module, second module, third module, or fourth module and generate a Chatbot configured to communicate with a user for remedying the anomalies.

2. The artificial intelligence (AI) advanced fleet monitoring system of claim 1, wherein an input to the first module comprises at least one of telemetry data or events data.

3. The artificial intelligence (AI) advanced fleet monitoring system of claim 1, wherein an input to the second module comprises at least one of a list of anomalies and events data.

4. The artificial intelligence (AI) advanced fleet monitoring system of claim 1, wherein an input to the third module comprises at least one of a list of labelled anomalies and events transition diagrams.

5. The artificial intelligence (AI) advanced fleet monitoring system of claim 1, wherein an input to the fourth module comprises failure prediction alerts.

6. The artificial intelligence (AI) advanced fleet monitoring system as in any of claims 1 to 5, wherein an input to the fifth module further comprises customer service call data or company knowledge database.

7. The artificial intelligence (AI) advanced fleet monitoring system of claim 1, wherein the third module is further configured to generate a device health indicator that provides a health of the component associated with the AI advanced fleet monitoring system.

8. The artificial intelligence (AI) advanced fleet monitoring system of claim 7, wherein the device health indicator comprises two components, a quantitative score and a qualitative description.

9. The artificial intelligence (AI) advanced fleet monitoring system of claim 8, wherein the quantitative score is one of discrete or continuous.

10. The artificial intelligence (AI) advanced fleet monitoring system of claim 9, wherein the quantitative score indicates a severity and/or urgency to act/escalate at the fourth module.

11. The artificial intelligence (AI) advanced fleet monitoring system of claim 10, wherein the third module comprises an autoencoder configured to create a contextual or point anomaly severity score.

12. The artificial intelligence (AI) advanced fleet monitoring system of claim 11, wherein the third module is further configured to generate an association rule learning algorithm configured to create a rule confidence using the contextual or point anomaly severity score.

13. The artificial intelligence (AI) advanced fleet monitoring system of claim 12, wherein the third module is further configured to generate a classifier configured to create a confidence using the rule confidence.

14. The artificial intelligence (AI) advanced fleet monitoring system as in any of claims 1 to 5 or 7 to 13, wherein the third module is further configured to generate a DHI output created using rule confidence, and/or
, wherein the qualitative description is configured to decide which automated task or service request to take, and/or
, wherein the third module is further configured to generate a classifier, which can be binomial or multinomial logistic regression, used to create a class, and/or
, wherein the third module is further configured to generate a cluster using the class and/or
, wherein the third module is further configured to generate an output comprising a class and/or a cluster description, and/or
, wherein the third module is further configured to provide a site health indicator, which is a summary of health indicators of all components associated with the AI advanced fleet monitoring system

15. A method for fleet monitoring using an artificial intelligence (AI) advanced fleet monitoring system, the method comprising:
detecting anomalies of a component associated with the AI advanced fleet monitoring system using a first module;
clustering or classifying failure modes and interpretation using a second module;
predicting failure alerts using a third module;
initiating an automated task or service request using a fourth module; and
receiving an input from at least one of the first module, second module, third module, or fourth module and generating, using a fifth module, a Chatbot configured to communicate with a user for remedying the anomalies.
